# EUROPÄISCHE PATENTANMELDUNG

(11) **EP 0 549 963 A2**
(43) Veröffentlichungstag der Anmeldung: **07.07.1993**
(21) Anmeldenummer: 92121431.8
(22) Anmeldetag: 17.12.1992
(51) Int. Cl.: G02B 6/44

(54) **Schaltschrank für Glasfaserkabel-Endgeräte**

(30) Priorität: 30.12.1991 CH 3864/91
(71) Anmelder: Reichle + De-Massari AG Elektro-Ingenieure, 8620 Wetzikon (CH)
(72) Erfinder: Reichle, Hans, CH-8620 Wetzikon (CH)
(74) Vertreter: Petschner, Goetz

(57) **Zusammenfassung**

Beim Schaltgestell mit Einschüben (2) für die opto-elektronischen Spleisskassetten umfassen die Mittel zur Aufnahme von Ueberlängen der Einzeladern oder Aderbündel auf der Unterseite (6) jedes Einschubes (2) einen äusseren Ringkanal (10) sowie einen inneren Schleifenbegrenzer (11), wobei der äussere Ringkanal (10) eine aussenseitige Einlaufbahn (12) für ein biegsames, die Einzeladern oder Aderbündel umhüllendes Kabelrohr (13) begrenzt, welche Einlaufbahn in eine innenseitige Führungsbahn (14) für die Einzeladern übergeht, deren freie Enden durch Oeffnungen (16) im Boden des Einschubes (2) zu dessen Oberseite (4) hindurchführbar sind.

## Beschreibung

Die vorliegende Erfindung betrifft einen Schaltschrank oder -gestell für Glasfaserkabel-Endgeräte, mit herausziehbaren Elektronikeinschüben oder Einschüben für die opto-elektronische Verbindungstechnik sowie mit Mitteln zur Aufnahme von Ueberlängen der Einzeladern oder Aderbündel.

In der Kabelendgerätetechnik für Lichtwellenleiter und der opto-elektronischen Anschlusstechnik werden modular kombinierbare Glasfaser-Kabelendgeräteeinschübe und Normspleisskassetten verwendet. Hierbei ist dafür Sorge zu tragen, dass beim Herausziehen der Einschübe die Adern so geführt werden, dass sie möglichst keine Bewegung ausserhalb eines Einschubs ausführen müssen. Innerhalb des Einschubs sollen die Adern so zusammengefasst und geführt sein, dass sie aus einer einfachen Schleife heraus sich in genügender Länge beim Vorziehen des Einschubs, ohne eine Krafteinwirkung zu erfahren, nach hinten aus dem Einschub selbsttätig herausziehen.

Um dies zu erreichen, wird bereits durch die EP-Patentanmeldung 89100556.3 vorgeschlagen, die Adern mehrfach zu befestigen und zwischen den Befestigungspunkten mittels Führungsnippel in eine Schleife zu zwingen.

Diese Art der Bevorratung der Ueberlänge an den Aderbündeln ist allerdings aufwendig bezüglich der Notwendigkeit der mehrfachen Befestigung als auch der Einfädelung in die Führungsnippel.

Somit liegt der Erfindung die Aufgabe zugrunde, eine Anordnung der Ueberlängen von optischen Adern zu schaffen, welche die Adern ohne örtliche Fixierungen und Durchdringungen in Schleifenform legt und führt, derart, dass auch bei grösster Packungsdichte die Ueberlängen ohne Gefahr für die Adern zur Verfügung stehen.

Dies wird erfindungsgemäss dadurch erreicht, dass die Mittel zur Aufnahme von Ueberlängen der Einzeladern oder Aderbündel auf der Unterseite jedes Einschubes angeordnet sind und einen äusseren Ringkanal sowie einen inneren Schleifenbegrenzer umfassen, wobei der äussere Ringkanal eine aussenseitige Einlaufbahn für ein biegsames, die Einzeladern oder Aderbündel umhüllendes Kabelrohr begrenzt, welche Einlaufbahn in eine innenseitige Führungsbahn für die Einzeladern übergeht, deren freie Enden durch Oeffnungen im Boden des Einschubes zu dessen Oberseite hindurchführbar sind.

Hierbei besteht eine bevorzugte Ausgestaltung darin, dass die Einlaufbahn weiter von einem gekrümmten Wandungsteil begrenzt ist und ferner, dass das Kabelrohr bei vollständig eingeschobenem Einschub unmittelbar vor dem Uebergang der aussenseitigen Einlaufbahn in die innenseitige Führungsbahn endet.

Eine beispielsweise Ausführungsform des Erfindungsgegenstandes ist nachfolgend anhand der Zeichnung näher erläutert. Es zeigen:
- Fig. 1: in schaubildartiger Teilansicht ein Schaltgestell mit einem herausziehbaren Einschub mit Spleisskassetten auf der Oberseite;
- Fig. 2: die Anordnung gemäss Fig. 1 mit einer schaubildartigen Unteransicht; und
- Fig. 3: die Anordnung gemäss Fig. 2 mit ausgezogenem Einschub.

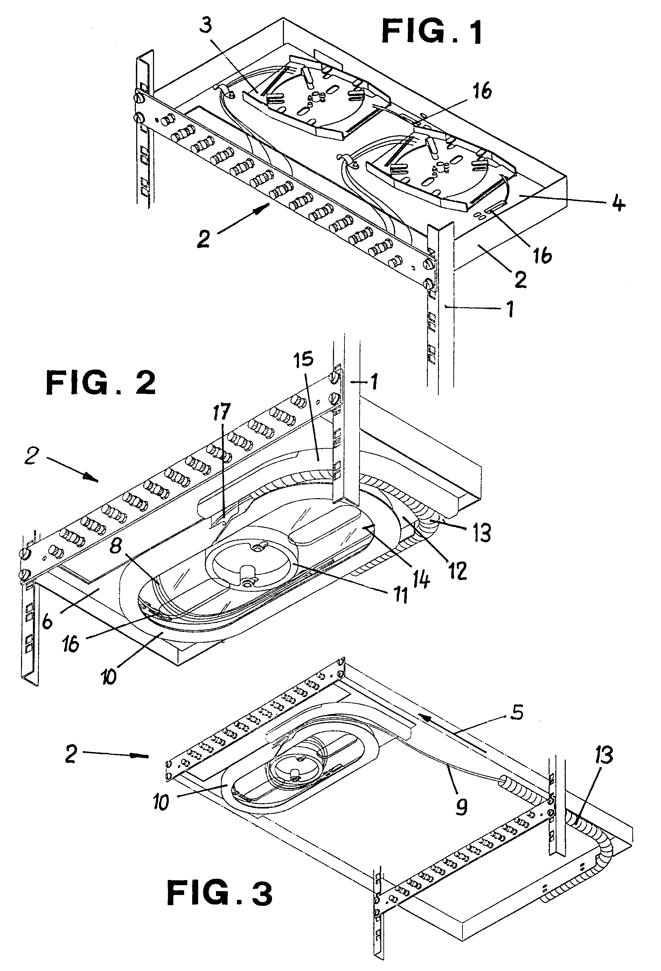

Im hier nur durch Träger 1 angedeuteten Schaltgestell sind in der Regel eine Mehrzahl Einschübe 2 angeordnet; hier ist ein Einschub 2 dargestellt mit zwei Spleisskassetten 3 in seiner oberen Kammer 4. Der Einschub 2 ist, wie in Fig. 3 angedeutet, nach vorn in Richtung des Pfeiles 5 ausziehbar.

Erfindungsgemäss sind hier nun die Mittel zur Aufnahme von Ueberlängen der Einzeladern 8 resp. Aderbündel 9 auf der Unterseite 6 jedes Einschubes 2 angeordnet und umfassen einen äusseren Ringkanal 10 sowie einen inneren Schleifenbegrenzer 11, wobei der äussere Ringkanal 10 eine aussenseitige Einlaufbahn 12 für ein biegsames, die Einzeladern oder Aderbündel umhüllendes Kabelrohr 13 begrenzt, welche Einlaufbahn in eine innenseitige Führungsbahn 14 für die Einzeladern übergeht, deren freie Enden durch Oeffnungen 16 im Boden des Einschubes 2 zu dessen Oberseite 4 hindurchführbar sind. Eine weitere Begrenzung der Einlaufbahn 12 erfolgt mittels gekrümmtem Wandungsteil 15.

Wie die Fig. 2 und 3 erkennen lassen, sind zunächst die Einzeladern 8 resp. Aderbündel 9 bis in deren Eintritt in die innenseitige Führungsbahn 14 vollständig vom Kabelrohr 13 umhüllt und so optimal geschützt, indem das Kabelrohr 13 erst unmittelbar vor dem Uebergang 17 der aussenseitigen Einlaufbahn 12 in die innenseitige Führungsbahn 14 endet.

Durch diese Massnahmen ist es nunmehr möglich, einen Einschub herauszuziehen resp. wieder einzuschieben, ohne dass die hochempfindlichen optischen Adern unzulässig beansprucht würden. Beim Herausziehen begrenzt der Schleifenbegrenzer 11 den Krümmungsradius der sich verkleinernden Aderschleife auf ein noch zulässiges Mass. Beim Einschieben hingegen nähert sich das Kabelrohr 13 wieder dem Uebergang 17, so dass die Adern jederzeit geschützt und geführt sind.

## Patentansprüche

1. Schaltschrank oder -gestell für Glasfaserkabel-Endgeräte, mit herausziehbaren Elektronikeinschüben oder Einschüben für die opto-elektronische Verbindungstechnik sowie mit Mitteln zur Aufnahme von Ueberlängen der Einzeladern oder Aderbündel, dadurch gekennzeichnet, dass die Mittel zur Aufnahme von Ueberlängen der Einzeladern oder Aderbündel auf der Unterseite (6) jedes Einschubes (2) angeordnet sind und einen äusseren Ringkanal (10) sowie einen inneren Schleifenbegrenzer (11) umfassen, wobei der äussere Ringkanal (10) eine aussenseitige Einlaufbahn (12) für ein biegsames, die Einzeladern oder Aderbündel umhüllendes Kabelrohr (13) begrenzt, welche Einlaufbahn in eine innenseitige Führungsbahn (14) für die Einzeladern übergeht, deren freie Enden durch Oeffnungen (16) im Boden des Einschubes (2) zu dessen Oberseite (4) hindurchführbar sind.

2. Schaltschrank nach Anspruch 1, dadurch gekennzeichnet, dass die Einlaufbahn (12) weiter von einem gekrümmten Wandungsteil (15) begrenzt ist.

3. Schaltschrank nach Anspruch 1, dadurch gekennzeichnet, dass das Kabelrohr (13) bei vollständig eingeschobenem Einschub (2) unmittelbar vor dem Uebergang (17) der aussenseitigen Einlaufbahn (12) in die innenseitige Führungsbahn (14) endet.
